Europäisches Patentamt

European Patent Office

Office européen des brevets

(11) Publication number: **0 042 655**

**A1**

# EUROPEAN PATENT APPLICATION

(21) Application number: **81200711.0**

(22) Date of filing: **22.06.81**

(51) Int. Cl.³: **A 01 L 15/00**
**B 24 B 23/02**

(30) Priority: **24.06.80 NL 8003635**

(43) Date of publication of application:
**30.12.81 Bulletin 81/52**

(84) Designated Contracting States:
**AT CH DE FR GB LI NL SE**

(71) Applicant: **Verenigde Metaalbedrijven Noord B.V.**
**Phileas Foggstraat 1**
**NL-7821 AJ Emmen(NL)**

(72) Inventor: **Brinks, Willem**
**Laan v.d. Eekharst 269**
**NL-7823 AG Emmen(NL)**

(74) Representative: **van Assen, Jan Willem Bernard, Ir.**
**22 Konijnenlaan**
**NL-2243 ER Wassenaar(NL)**

(54) Hand held apparatus for trimming the claws of animals with one or two hoofs, such as cows.

(57) A hand held apparatus (1) for trimming the claws of animals with one or two hoofs, such as cows, which apparatus can be driven by a drive set with a rotating outgoing shaft (11), on which a chip removing member (6) is fastened, that can be brought into contact with the claw to be trimmed.

The inventive apparatus is providing as a chip removing member a milling cutter (6) of which the axis of rotation (11) extends preferably substantially at right angles to the surface of the claw to be trimmed.

According to a preferred embodiment a cylindrical side milling cutter (6) is used.

Fig.1.

Fig.2.

Title : Hand held apparatus for trimming the claws of animals with one or two hoofs, such as cows.

The invention relates to a hand held apparatus for trimming the claws of animals with one or two hoofs, such as cows, which apparatus can be driven by a drive set with a rotating outgoing shaft, on which a chip removing member is fastened, that can be brought into contact with the claw to be trimmed.

An apparatus of this type is known from practice. There at the chip removing member consists of a rotating, non-protected abrasive or grinding disk, which has a plurality of projections, with which the chips are taken off the trimmed claw of the animal. This known apparatus has the objection, that the abrasive or grinding disk gets clogged already after a relatively short operation time by the cut off chips of the hornic substance of the claw or hoof, so that the disk looses its action and must be cleaned or replaced by another disk already after a relatively short operating time.

The object of the invention is providing a chip removing member with which a long, substantially maintenance free operating time is possible, without this chip removing member getting clogged with cut off chips of the claw or hoof within a short time.

This object is reached according to the invention, in that the chip removing member is a milling cutter. This milling cutter has a great chip removing power, does not get easily clogged and has a long life span, so that cleaning or exchanging of the milling cutter is only necessary after a long time. Furthermore the device is completely safe, both for the operating person as for the treated animal, whereas it is universally usable and can be operated with ease.

According to a preferred embodiment of the invention the axis of rotation of the milling cutter extends substantially at right angles to the surface of the claw to be trimmed. This has the advantage, that the cutting depth of the milling cutter can be easily controlled.

According to another preferred embodiment the milling cutter is a cylindrical side milling cutter. Here the end face is free of cutting edges, whereby the side milling cutter is very safe and is perfectly satisfactory especially for the toe treatment, which is a delicate operation.

The invention will now further be elucidated referring to the accompanying drawing of some embodiments.

Fig. 1 is a side view of an embodiment of the claw trim apparatus according to the invention.

Fig. 2 is a lower view of the apparatus according to fig. 1.

Fig. 3 is a side view in axial cross section of the head part of the apparatus on a larger scale.

Fig. 4 is a lower view of fig. 3.

Fig. 5 is a turned over side view of the head, in which the chip discharge channel is clearly shown.

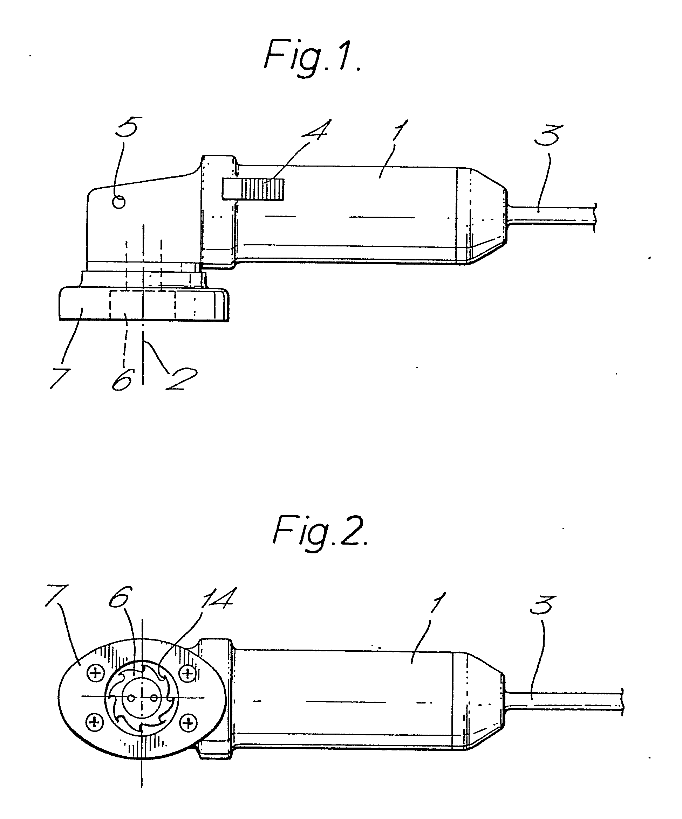

According to the drawing and especially fig. 1 and 2 the apparatus comprises a drive set 1, which is in the shown embodiment an electrically driven machine. Thereby the outgoing shaft 2 extends at right angles to the longitudinal axis of the machine 1 in order to facilitate the handling of the apparatus. Obviously it is also possible to place the out going shaft 2 parallel to or in the elongation of the (non shown) longitudinal axis of the machine 1. This machine 1 has been provided with an electrical feed cable 3 and with an externally operable on-out-switch 4, whereas also a recess 5 is present in which a (non shown) blocking pin can be placed for exchanging the cutting tool 6 that is housed in the head 7.

The head 7 is preferably made from a synthetic material, such as nylon, but can also exist out of metal, such as for instance light metal. This head 7 is fastened by means of a plurality, in the shown embodiment four bolts 8 with a preferably internal cross, by means of a fastening ring 9 to the end 10 of the drive part of the machine 1. Through this end 10 extends the outgoing shaft 11 of this machine 1, which carries at the outer end a threaded part 12 of a smaller diameter, whereby on this end 12 the milling cutter 6 is fastened by means of a screw nut 13. This milling cutter 6 is in the shown embodiment a side cutter, which means, that the cutting edges 14, of which eight have been shown in fig. 2, are present on the cylindrical surface 15 of the milling cutter and extend preferably helically over this surface, whereas the end surface 16, in which the end nut 13 is received, is substantially smooth.

At a (non shown) alternative embodiment of the apparatus according to the invention it is, however, possible to use an end cutter instead of a side cutter, the cutting edges 14 then being present on the end surface 16, whereas the cylindrical casing surface 15 then being smooth.

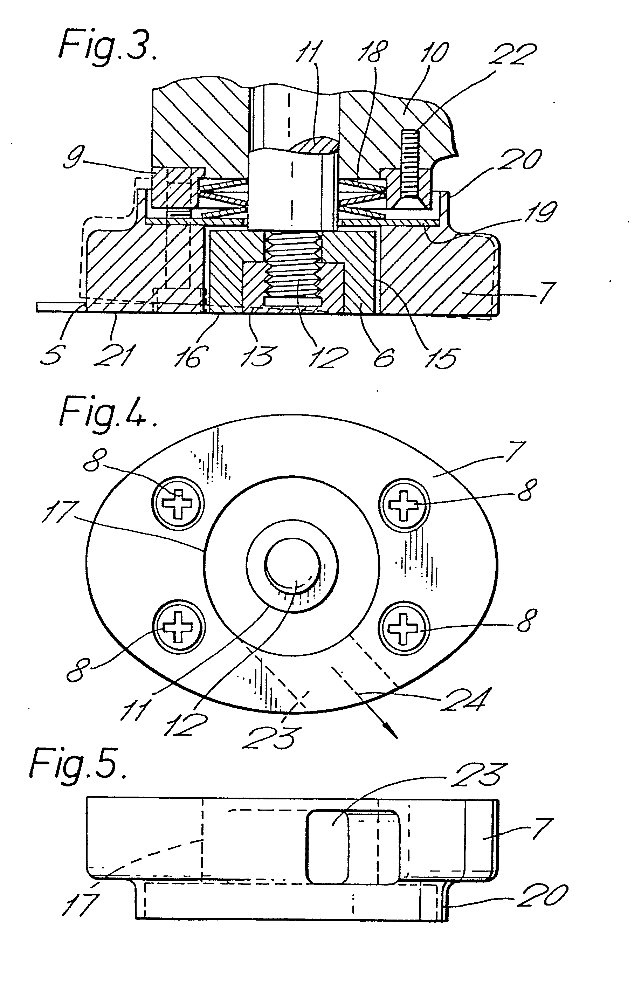

The milling cutter 6 is present in a cylindrical recess 17 of the head 7, which recess 17 has a somewhat larger diameter than the milling cutter 6, so that the cylindrical casing 15 can always rotate with sufficient play in the recess 17 also when the milling cutter is in the operating position. The head 7 is pressed outwardly by means of springs, in the embodiment shown in fig. 3 three spring cups 18. The spring cups 18 are arranged around the rotatable outgoing shaft 11 in the chamber which is formed by the inner space of the fastening ring 9 and the plate shaped pressure ring 19, which rests on the end surface of the head 7 which is turned to the end 10 of the machine 1. Preferably the head 7 has furthermore an upstanding lip 20 which surrounds the fastening ring 9 with some play.

By means of this structure the head can be used in the operating position by fastening or loosening one or more screw bolts 8 through which this head is adjusted more or less to the end 10 of the machine 1. Thereby the milling depth $s$ can be adjusted, such as for instance on preferably one side to a value of for instance 3 mm, such as indicated with dash lines in fig. 3. In the non operating position, such as indicated with solid lines in fig. 3, the end surfaces 21 of the head 7 and 16 of the milling cutter 6, nevertheless, lie in one plane, in which there is no milling action however.

The fastening ring 9 is fastened according to fig. 3 by means of a plurality of screws 22 to the end 10 of the machine 1, but can also be formed integerly therewith.

The head 7 is provided with a chip removal channel 23, through which the chips of hornic substance cut from the claws or hoofd are removed in the direction of the arrow 24. The channel 23 extends from the cylindrical inner surface 17 of the head 7 and debouches into the substantially elliptical cylindrical outer surface of the head 7 shown in fig. 4. The cross section of the channel 23 is preferably rectangular with somewhat rounded corners. This channel 23 extends tangentially with respect to the milling cutter 6, by means of which an undisturbed removal of the chips takes place.

The head 7 can be provided with an additional,(non shown) side opening or channel, which debouches into the cylindrical surface 17. Through this additional channel the claw point can be inserted in order to be shortened by its contact with the milling cutter.

The invention is not limited to the shown and described embodiments but covers all variations thereof. For instance, the apparatus can not fixedly be fastened to a machine, but form a separate appliance, which can be fastened to a drive set, on which also other appliances of different type can be fastened. Furthermore the side milling cutter can be arranged with its axis of rotation parallel to the end surface 21 of the head 7.

0042655

- 1 -

<u>CLAIMS</u>

1. A hand held apparatus for trimming the claws of animals with one or two hoofs, such as cows, which apparatus can be driven by a drive set with a rotating outgoing shaft, on which a chip removing member is fastened, that can be brought into contact with the claw to be trimmed, characterised in that, the chip removing member is a milling cutter (6).

2. Apparatus according to claim 1, characterised in that, the axis of rotation (2) of the milling cutter (6) extending substantially at right angles to the surface of the claw to be trimmed.

3. Apparatus according to claim 1 or 2, characterised in that, the milling cutter (6) is a cylindrical side cutter.

4. Apparatus according to claim 1, characterised in that, the milling cutter (6) is an end cutter.

5. Apparatus according to claim 1 through 4, characterised in that, the milling cutter (6) is at least partly enclosed by a head (7) fastened to a fixed part, such as the motor body (10).

6. Apparatus according to claims 1 through 5, characterised in that, the head (7) is adjustably fastened with respect to the fixed party such as the motor body (10), with a plurality of screw bolts (8), for liberating on preferably one side more or less of the chip removing surface (15) of the milling cutter (6).

7. Apparatus according to claims 1 through 6, characterised in that, the head (7) is fastened by means of springs (18) with the fixed part, such as the motor body (10).

8. Apparatus according to claims 1 through 7, characterised in that, the head (7) is provided with a channel (23) for the removal of milled off claw chips, which channel (23) starts from the surface (17) of the head (7) that is adjacent to the chip removing surface (15) of the milling cutter (6) and debouches into the outside of the head (7).

9. Apparatus according to claims 1 through 7, characterised in that, the chip removal channel (23) extends substantially tangential with respect to the cylindrical inner surface (17) of the head (7).

10. Apparatus according to claims 1 through 9, characterised in that, the outside of the head has the shape of an elliptical cylinder.

11. Apparatus according to claims 1 through 10, characterised in that, the head (7) is made from synthetic material, such as nylon.

12. Apparatus according to claims 1 through 11, characterised in that, the head (7) is provided with an additional channel for inserting and shortening of the claw point.

0042655

80203 811108
VERENIGDE METAAL-
BEDRIJVEN NOORD BV

## Fig.1.

## Fig.2.

VERENIGDE METAALBEDRIJVEN
NOORD B.V.

**Fig.3.**

**Fig.4.**

**Fig.5.**

# EUROPEAN SEARCH REPORT

European Patent Office

Application number
EP 81 20 0711

| DOCUMENTS CONSIDERED TO BE RELEVANT | | | CLASSIF CATION OF THE APPLICATION (Int Cl.³) |
|---|---|---|---|
| Category | Citation of document with indicatio·, where appropriate, of relevant passages | Relevant to claim | |
| X | <u>FR - A - 734 911</u> (COULET)<br>* Whole document * | 1,3-6,<br>8-9 | A 01 L 15/00<br>B 24 B 23/02 |
| | <u>FR - A - 672 032</u> (MARTIN)<br>* Abstract, paragraph c * | 3,5 | |
| | <u>FR - A - 1 042 129</u> (PERRIN-JUNIET)<br>* Page 2, left-hand column and half, right-hand column; figures * | 1,3-5 | **TECHNICAL FIELDS SEARCHED (Int Cl.³)** |
| | <u>GB - A - 2 460/1911</u> (LANSFORD)<br>* Whole document | 1,4-6 | A 01 L<br>A 01 L<br>A 61 D<br>B 23 C<br>B 24 B<br>B 27 G |
| | <u>DE - A - 2 159 523</u> (WERNER)<br>* Page 1, paragraphs 3,4; figure * | 1-2,<br>4-5 | |
| | <u>DE - A - 2 408 844</u> (METABO)<br>* Claims 1,8; figures * | 1-2 | **CATEGORY OF CITED DOCUMENTS** |
| | <u>US - A - 2 124 042</u> (SHIELDS)<br>* Page 1, right-hand column, lines 37-53 * | 2,5 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | <u>DE - B - 1 068 145</u> (BOSCH)<br>* Claim 1; figures 1,2 * | 2,5-6 | |
| | ── ./. | | &: member o the same patent family, corresponding document |

| | The present search report has been drawn up for all claims | | |
|---|---|---|---|
| Place of search<br>The Hague | Date of completion of the search<br>02-10-1981 | Exam ner<br>CRUCHTEN | |

EPO Form 1503 1  06.78

**European Patent Office**

**EUROPEAN SEARCH REPORT**

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | Relevant to claim | | |
| A | DE - A - 2 632 759 (BLACK & DECKER) <br> * Figure 3 * <br><br> ---- | 6 | | |
| | | | | TECHNICAL FIELDS SEARCHED (Int. Cl.³) |

EPO Form 1503.2   06.78